# EUROPÄISCHE PATENTANMELDUNG

(11) **EP 1 741 373 A1**
(43) Veröffentlichungstag der Anmeldung: **10.01.2007**
(21) Anmeldenummer: 06013779.1
(22) Anmeldetag: 04.07.2006
(51) Int. Cl.: A47J 42/50

(54) **Gewürzmühle**

(30) Priorität: 09.07.2005 DE 102005032166; 09.07.2005 DE 202005010855 U
(71) Anmelder: Recknagel GmbH, 75334 Straubenhardt (DE)
(72) Erfinder: Recknagel, Stephan, 75334 Straubenhardt (DE)
(74) Vertreter: Leitner, Waldemar

(57) **Zusammenfassung**

Die Erfindung betrifft eine Gewürzmühle, die einen Grundkörpers (2) aufweist, in dessen Innenraum (5) das zu mahlende Gewürz einbringbar ist, und bei der ein mit dem Innenraum (5) des Grundkörpers (2) in Verbindung stehendes Mahlwerk (3) vorgesehen ist.

Erfindungsgemäß ist vorgesehen, dass in den Innenraum (5) des Grundkörpers (2) ein Wechselbehälter (10) einbringbar ist.

## Beschreibung

Die Erfindung betrifft eine Gewürzmühle, die einen Grundkörper aufweist, in dessen Innenraum das zu mahlende Gewürz einbringbar ist, und bei der ein mit dem Innenraum des Grundkörpers in Verbindung stehendes Mahlwerk vorgesehen ist.

Eine derartige Gewürzmühle ist bekannt. In den Innenraum des meist hülsenartigen Grundkörpers der bekannten Gewürzmühle wird durch Öffnen des Verschlusses der Gewürzmühle das zu mahlende Gewürz, z. B. Salz oder Pfeffer, eingebracht. Das im Innenraum aufgenommene Gewürz wird dann durch eine Betätigung des Mahlwerks der Gewürzmühle gemahlen.

Die bekannten Gewürzmühlen besitzen nun den Nachteil, dass in ihnen nur jeweils eine einzige Gewürzart aufnehmbar ist. Dies hat zur Folge, dass der Benutzer mehrere Gewürzmühlen vorrätig halten muß, wenn er unterschiedliche Gewürze mahlen möchte.

Es ist nun Aufgabe der vorliegenden Erfindung, eine Gewürzmühle der eingangs genannten Art derart weiterzubilden, dass mit ihr in einfacher Art und Weise unterschiedliche Gewürze gemahlen werden können.

Diese Aufgabe wird erfindungsgemäß dadurch gelöst, dass in den Innenraum des Grundkörpers ein Wechselbehälter einbringbar ist.

Durch die erfindungsgemäßen Maßnahmen wird in vorteilhafter Art und Weise eine Gewürzmühle geschaffen, die sich dadurch auszeichnet, dass in einfacher Art und Weise hintereinander unterschiedliche Gewürze mit ihr gemahlen werden können: Durch ein einfaches Ersetzen eines ein bestimmtes Gewürz enthaltenden ersten Wechselbehälters durch einen zweiten, ein anderes Gewürz enthaltenen Wechselbehälter kann ein "Gewürz-Wechsel" besonders einfach durchgeführt werden.

Eine vorteilhafte Weiterbildung der Erfindung sieht vor, dass der Wechselbehälter ein Arretierelement aufweist, mit dem der Wechselbehälter mittels einer korrespondierenden Arretiereinrichtung der erfindungsgemäßen Gewürzmühle im vorzugsweise hülsenartig ausgebildeten Grundkörper der Gewürzmühle festlegbar ist. Dabei wird bevorzugt, dass dieses Arretierelement als ein Gewinde ausgebildet ist, welches in das Mahlwerk der Gewürzmühle einschraubbar ist.

Weitere vorteilhafte Weiterbildungen der Erfindungen sind Gegenstand der Unteransprüche.

Weitere Einzelheiten und Vorteile der Erfindung sind dem Ausführungsbeispiel zu entnehmen, das im folgenden anhand der Figuren beschrieben wird. Es zeigen:
- Figur 1:: eine schematische Darstellung eines Ausführungsbeispiels einer Gewürzmühle
- Figur 2:: eine schematische Darstellung eines Ausführungsbeispiels eines Wechselbehälters

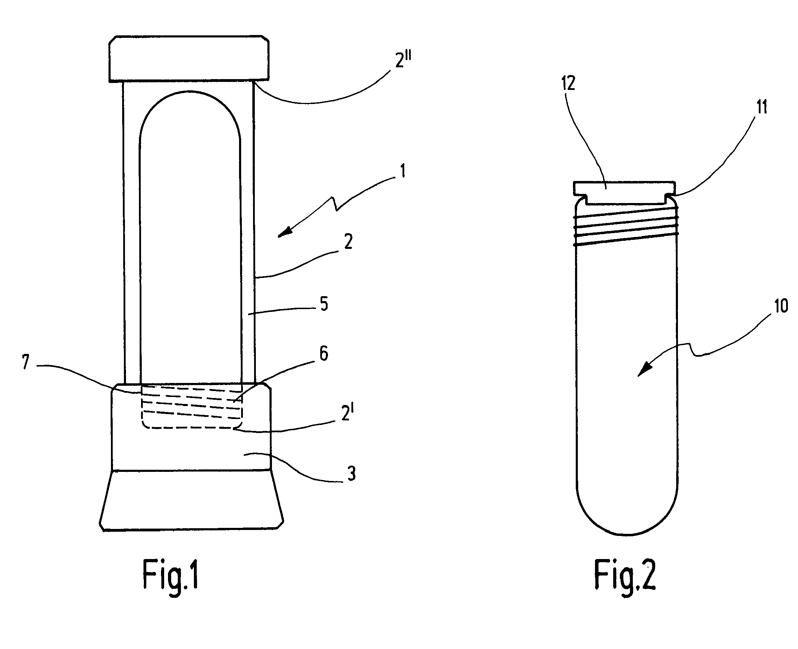

In Figur 1 ist nun eine allgemein mit 1 bezeichnete Gewürzmühle dargestellt, die einen hülsenartigen Grundkörper 2 aufweist, an dessen einem Ende 2' ein Mahlwerk 3 und an einem dem Mahlwerk 3 gegenüberliegenden Ende 2" ein Verschluß 4 angeordnet ist. In einem Innenraum 5 des Grundkörper 2 ist ein Wechselbehälter 10 eingebracht, welcher das zu mahlende Gewürz enthält. Durch einen einfachen Austausch eines ersten Wechselbehälters 10, der ein bestimmtes Gewürz enthält, gegen einen anderen Wechselbehälter, der ein anderes Gewürz enthält, ist somit in vorteilhafter Art und Weise ein Gewürz-Wechsel möglich. Durch die beschriebene Gewürzmühle 1 ist es somit nicht mehr erforderlich, mehrere derartiger Gewürzmühlen bereit zu halten, um unterschiedliche Gewürze mahlen zu können.

In Figur 2 ist nun ein Ausführungsbeispiel eines Wechselbehälters 10 dargestellt. Im hier beschriebenen Fall ist der Wechselbehälter 10 röhrchenförmig ausgebildet, wobei sein oberes, offenes Ende 11 mittels eines Verschlusses 12 verschließbar ist. Vorzugsweise weist der Wechselbehälter 10 ein Arretierelement 13, der im hier gezeigten Fall als ein Außengewinde 14 ausgebildet ist, auf. Das Arretierelement 13 bzw. das Außengewinde 14 wirkt mit einer Arretiereinrichtung 6 der Gewürzmühle 1 zusammen, die im hier gezeigten Fall als ein Innengewinde 7 des Mahlwerks 3 ausgebildet ist, und dient dazu, den Wechselbehälter 10 im Innenraum 5 des Grundkörpers 2 der Gewürzmühle 1 lagezufixieren.

## Patentansprüche

1. Gewürzmühle, die einen Grundkörpers (2) aufweist, in dessen Innenraum (5) das zu mahlende Gewürz einbringbar ist, und bei der ein mit dem Innenraum (5) des Grundkörpers (2) in Verbindung stehendes Mahlwerk (3) vorgesehen ist, **dadurch gekennzeichnet, dass** in den Innenraum (5) des Grundkörpers (2) ein Wechselbehälter (10) einbringbar ist.

2. Gewürzmühle nach Anspruch 1, **dadurch gekennzeichnet, dass** der Grundkörper (2) hülsenförmig ausgebildet ist und zwei offene Enden (2', 2") besitzt.

3. Gewürzmühle nach Anspruch 2, **dadurch gekennzeichnet, dass** an einem offenen Ende (2') das Mahlwerk (3) angeordnet ist.

4. Gewürzmühle nach einem der vorangehenden Ansprüche, **dadurch gekennzeichnet, dass** am anderen offenen Ende (2") der Gewürzmühle (1) ein Verschluß (4) angeordnet.

5. Gewürzmühle nach einem der vorangehenden Ansprüche, **dadurch gekennzeichnet, dass** die Gewürzmühle (1) eine Arretiereinrichtung (6) für den Wechselbehälter (10) aufweist.

6. Gewürzmühle nach einem der vorangehenden Ansprüche, **dadurch gekennzeichnet, dass** der Wechselbehälter (10) ein mit der Arretiereinrichtung (6) der Gewürzmühle (1) zusammenwirkendes Arretierelement (13) aufweist.

7. Gewürzmühle nach Anspruch 6, **dadurch gekennzeichnet, dass** das Arretierelement (13) des Wechselbehälters (10) als ein Außengewinde (14) und die Arretiereinrichtung (6) der Gewürzmühle (1) als ein Innengewinde (7) ausgebildet ist.
